(19) Europäisches Patentamt / European Patent Office / Office européen des brevets

(11) **EP 2 403 165 A1**

(12) **EUROPEAN PATENT APPLICATION**

(43) Date of publication:
**04.01.2012 Bulletin 2012/01**

(51) Int Cl.:
*H04B 10/12* (2006.01)  *H04B 1/26* (2006.01)

(21) Application number: **10290368.9**

(22) Date of filing: **02.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75007 Paris (FR)**

(72) Inventors:
• **Maier, Simone**
**70656 Stuttgart (DE)**

• **Haslach, Christoph**
**70178 Stuttgart (DE)**
• **Templ, Wolfgang**
**74372 Sersheim (DE)**
• **Kuebart, Wolfgang**
**70193 Stuttgart (DE)**

(74) Representative: **Richardt Patentanwälte**
**Wilhelmstraße 7**
**65185 Wiesbaden (DE)**

Remarks:
Amended claims in accordance with Rule 137(2) EPC.

(54) **Radio frequency system for optical heterodyning**

(57) Radio frequency system (312) for optical heterodyning, the radio frequency system comprising up to two modulators, a light source, a splitter, a combiner, an optoelectronic device, and an analogue-digital-converter. The radio frequency system is adapted for performing optical heterodyning with an intermediate frequency signal.

Fig. 1

EP 2 403 165 A1

## Description

### Field of the invention

The invention relates to a radio frequency system for optical heterodyning, a sender with such a radio frequency system, a receiver with such a radio frequency system and a base station comprising such a receiver and/or such a sender.

### Background and related art

In common base stations of a wireless telecommunication network transmission signals are transferred to and from the antenna unit as base band signals, frequency conversion is done mostly in each remote antenna unit separately.

### Summary of the invention

It is the object of the present invention to provide an improved radio frequency system for optical heterodyning, a receiver with such a radio frequency system, a sender with such a radio frequency system, and a base station apparatus with such a receiver and/or such a sender. This object is achieved by a radio frequency system, a receiver, a sender, and a base station according to the independent claims. Embodiments of the invention are given in the dependent claims.

The invention provides a radio frequency system for optical heterodyning with first receiving means for receiving an analogue electrical intermediate frequency signal, wherein the analogue electrical intermediate frequency signal carries information. The intermediate frequency is herein understood as a frequency, to which an information signal is shifted as an intermediate step in transmission or reception in e.g. wireless telecommunication and which is different from frequency of the transmitted or received carrier of the information signal. In embodiments of the invention the intermediate frequency signal is created by mixing up a baseband signal to the intermediate frequency. Preferably the intermediate frequency signal lies in the range of a few hundreds of MHz, while the baseband frequency is in the range of a few to tens of MHz. The radio frequency system further comprises second receiving means for receiving an analogue or digital electrical radio frequency signal with a carrier at a so called radio frequency. The radio frequency is herein understood as a frequency lying above the intermediate frequency from hundreds of MHz to several GHz.

The radio frequency system further comprises an analogue digital converter for converting the analogue electrical intermediate frequency signal into a digitized intermediate frequency signal. The analogue digital converter may for example be a delta-sigma modulator or a pulse width modulator. A light source in the radio frequency system is used for emitting a first light beam. The light source may for example be a laser or a light emitting diode (LED). A first splitter in the radio frequency system is adapted for splitting the first light beam into a second and a third light beam. The digitized intermediate frequency signal modulates either the first light beam or the second light beam by a first modulator into a modulated first or second light beam.

A second modulator is adapted for modulating the third light beam by the analogue electrical radio frequency signal into a modulated third light beam. The second modulator comprises third receiving means for receiving the analogue or digital electrical radio frequency signal. The radio frequency system further comprises a first combiner for combining the second or modulated second and the modulated third light beam into a fourth light beam. An optoelectronic device in the radio frequency system is adapted for converting the fourth light beam into an electrical output signal. The electrical output signal comprises the information. The electrical output signal has an electrical output signal frequency. The electrical output signal frequency is a combination of the intermediate frequency and the radio frequency.

According to embodiments of the invention the second and the third modulator are phase modulators, which vary the phase of a light beam by means of an electrical signal.. This may for example be done by field electrodes along an optical waveguide, the latter consisting of electro-optically active material. The electric field changes the optical properties of the waveguide, thus modulating the phase of the respective light beam. In the combiner, the second and the third light beam interfere so that their phase modulations are converted to an amplitude or more complex modulation of the forth light beam, depending on the size of the phase differences of the second and the third light beam.

According to embodiments of the invention the light source comprises fourth receiving means for receiving the digitized intermediate frequency signal. The light source further comprises modulation means for modulating the first light beam by the digitized intermediate frequency signal.

According to embodiments of the invention the light source is a laser or a light emitting diode.

According to embodiments of the invention the optoelectronic device is a photodiode or a phototransistor.

The optoelectronic device converts the fourth light beam into a photocurrent, a process, which can be mathematically described by a squaring of the optical input signal. This leads to the fact that the electrical output signal frequency is a combination of the intermediate frequency and the radio frequency.

The electromagnetic field strength of the fourth light beam, which is a combination of the second and the third light beam, is for example the following:

$$e_4 = e_2 \cos(\omega_2 t) + e_3 \cos(\omega_3 t)$$

wherein $e_i$ is the electromagnetic field strength of the i-th light beam, $\omega_i$ is the frequency of the i-th light beam, and t is the time.

Since the current (i) of the electrical output signal is proportional to the electromagnetic field strength raised to the second power, the following relation applies:

$$i \propto e_4^2 = e_2^2 \cos^2(\omega_2 t) + 2e_2 e_3 \cos(\omega_2 t)\cos(\omega_3 t) + e_3^2 \cos^2(\omega_3 t)$$

$$\Leftrightarrow i \propto e_2^2 \cos^2(\omega_2 t) + e_2 e_3 \left[\cos((\omega_2 + \omega_3)t) + \cos((\omega_2 - \omega_3)t)\right] + e_3^2 \cos^2(\omega_3 t)$$

Thus, the frequency of the electrical output signal is proportional to a combination of the frequencies of the second and third light beam.

In another aspect the invention relates to a sender with a radio frequency system according to embodiments of the invention. The sender further comprises receiving means for receiving a baseband signal. Modulation means in the sender are adapted for modulating the baseband signal into an intermediate frequency signal. Sending means are comprised by the sender for sending the intermediate frequency signal to the first receiving means of the radio frequency system.

In another aspect the invention relates to a receiver with a radio frequency system according to embodiments of the invention. The receiver further comprises first receiving means for receiving a high frequency signal containing the information. The receiver further comprises second receiving means for receiving an analogue electrical frequency signal. Sending means in the receiver are adapted for sending the high frequency signal to the first receiving means of the radio frequency system and for sending the analogue electrical radio frequency signal to the second receiving means of the radio frequency system.

In yet another aspect the invention relates to a base station comprising a receiver according to embodiments of the invention and/or a sender according to embodiments of the invention.

## Brief description of the drawings

In the following preferred embodiments of the invention will be described, by way of example only, and with reference to the drawings in which:

Figure 1 is a block diagram of a radio frequency system, where one light beam is split up into two other light beams, which are then modulated by phase modulators;

Figure 2 is a block diagram of a radio frequency system, where an already modulated laser beam is split up into two laser beams, of which only one is modulated by a phase modulator;

Figure 3 is a block diagram of a base station with a sender and a receiver, wherein the sender and the receiver comprise a radio frequency system for optical heterodyning according to embodiments of the invention.

## Detailed description

Like numbered elements in these Figs. are either identical elements or perform the same function. Elements which have been discussed previously will not necessarily be discussed in later Figs. if the function is identical.

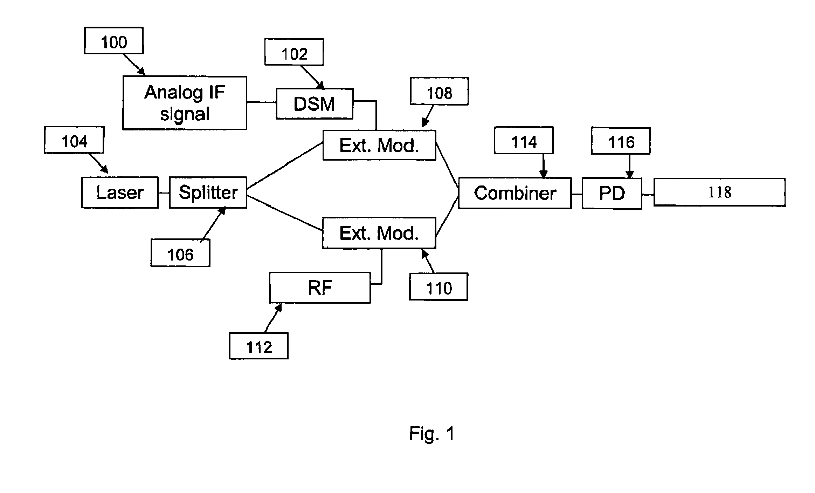

Fig. 1 is a block diagram of a radio frequency system for optical heterodyning. An analogue intermediate frequency (IF) signal is received at the receiving means 100 this analogue intermediate frequency signal is then modulated by an analogue-digital-converter 102, which may for example be a delta-sigma modulator (DSM), into a digitized intermediate frequency signal. A laser 104 emits a first laser beam, which is split up by splitter 106 into a second and a third laser beam. The second and the third laser beam are then transmitted, for example via optical waveguides, through phase modulators 108 and 110. The phase modulators 108 and 110 modulate the phase of the second and third laser beam.

The first phase modulator 108 modulates the second laser beam by the digitized intermediate frequency signal, which the phase modulator 108 received from analogue-digital-converter 102. The second phase modulator 110 modulates the third laser beam by an analogue electrical radio frequency signal into a modulated third laser beam.

The analogue electrical radio frequency signal is received by second receiving means 112. The analogue electrical radio frequency signal may for example be generated by another entity, e.g. in a base station of a wireless telecommunication network, where the radio frequency system may be located. Second receiving means 112 then transmits the electrical radio frequency to the second phase modulator 110, which is adapted to modulate the phase of the third light beam as explained above.

The combiner 114 combines the modulated second and the modulated third laser beam into a fourth laser beam, which is then directly transmitted to the optoelectronic device 116, which may for example be a photodiode (PD). The electrical output signal of the optoelectronic device 116 is then transmitted to a signal processing circuit 118, where the electrical output signal may be further processed.

The analogue IF signal may for example have a frequency of 450MHz. The digitized IF signal has then also this intermediate frequency of 450MHz. Thus, the second light beam is phase modulated by a frequency of 450MHz carrying the information. The analogue electrical radio frequency signal may for example have a frequency of 1.8 GHz. The information originally carried by the analogue IF signal is also carried by the electrical output signal of the optoelectronic device 116. As explained above the electrical output signal of the optoelectronic device 116 is proportional to the squared field strength of the fourth light beam. Thus, the information is at least detectable at three frequencies: 450MHz and 1.8 +/- 450MHz.

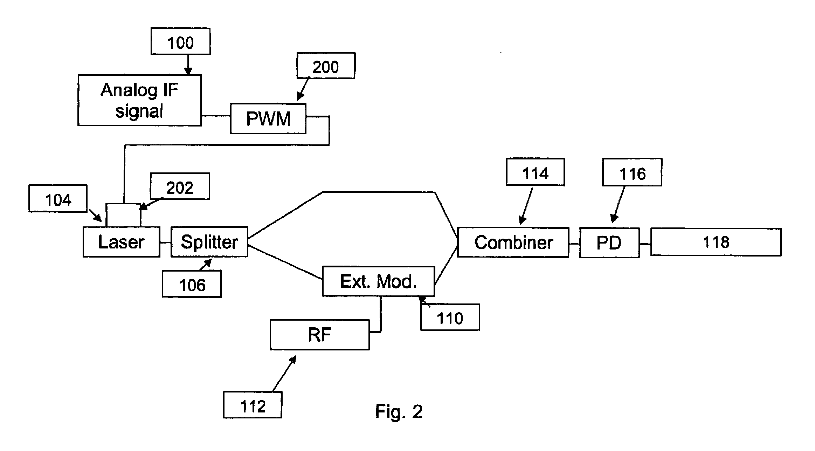

Fig. 2 is a block diagram of another embodiment of a radio frequency system for optical heterodyning in the intermediate frequency range. As in Fig. 1 first receiving means 100 receive an analogue IF signal, which is then digitized — differing from Fig. 1 — by a pulse width modulator 200. The main difference to Fig. 1 is, that the first laser beam emitted by laser 104 is directly modulated by the digitized intermediate frequency signal symbolized by amplitude modulator 202. Modulation is performed in this case by modulating not the phase but the amplitude of the light beam. Since the modulation is applied directly to the laser, the second and third laser beam carry both the information carried by the digitized intermediate frequency signal. In this embodiment only one phase modulator 110 for the third laser beam is needed. The second laser beam is not modulated further. The third laser beam is again modulated by the analogue electrical radio frequency signal received as in Fig. 1 by second receiving means 112. Further signal processing in the combiner, the optoelectronic device 116 and the signal processing circuit 118 are similar to Fig. 1.

If, for example, a user would like to have the information to be detectable at the same frequencies as in the embodiment of Fig. 1 with the same analogue IF signal frequency of 450MHz, the analogue electrical radio frequency signal would have to be also 1.8GHz. The second and the third light beam are already modulated by a frequency of 450MHz, because the first light beam is modulated by this frequency. Then, the third light beam is additionally modulated by 1.8GHz. Thus, the information would be detectable in this case also at least at three frequencies of 450MHz and +1.8GHz and +/-450MHz.

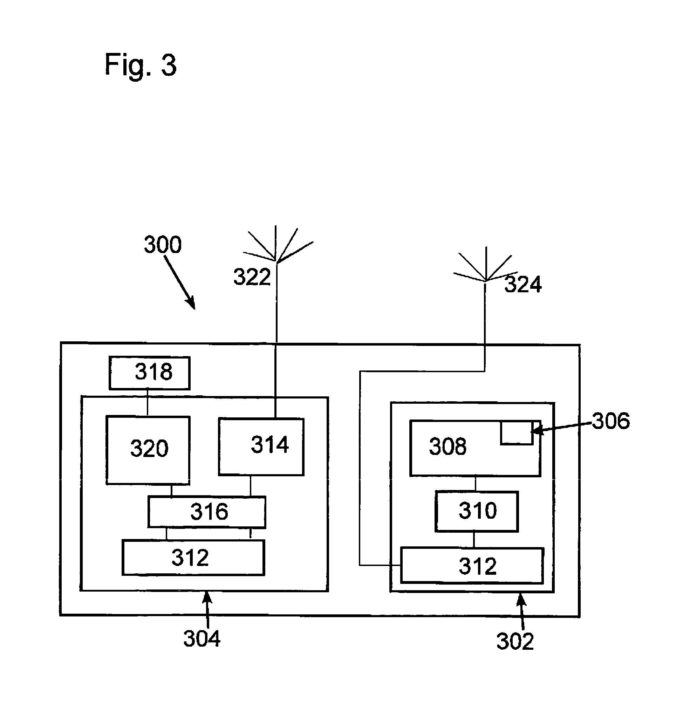

Fig. 3 is a block diagram of a base station 300 comprising a sender unit 302 and a receiver unit 304. The sender unit 302 comprises receiving means 306 for receiving a baseband signal, which is then modulated by modulation means 308 into an intermediate frequency signal. After that sending means 310 sends the intermediate frequency signal to the first receiving means (not depicted) of the radio frequency system 312 in sender unit 302. The output of radio frequency system 312 in receiver unit 302 is transmitted via a second antenna 324. The receiver unit 304 comprises first receiving means 314 for receiving a high frequency signal containing the information from a first antenna 322. Second receiving means 320 is adapted for receiving an analogue electrical radio frequency signal, which may for example be generated by a radio frequency generator 318 in the base station 300. The receiver unit 304 further comprises sending means 316 for sending the high frequency signal to the first receiving means of the radio frequency system 312 in the receiver unit 304 and for sending the analogue electrical radio frequency signal to the second receiving means of the radio frequency system 312 in receiver unit 304.

List of Reference Numerals

| 100 | Receiving means |
| --- | --- |
| 102 | Analogue digital converter |
| 104 | Laser |
| 106 | Splitter |
| 108 | Modulator |
| 110 | Modulator |

(continued)

| 112 | Receiving means |
|-----|-----------------|
| 114 | Combiner |
| 116 | Optoelectronic device |
| 118 | Signal processing circuit |
| 200 | Pulse width modulator |
| 202 | Amplitude modulator |
| 300 | Base station |
| 302 | Sender unit |
| 304 | Receiver unit |
| 306 | Receiving means |
| 308 | Modulation means |
| 310 | Sending means |
| 312 | Radio frequency system |
| 314 | Receiving means |
| 316 | Sending means |
| 318 | Radio frequency generator |
| 320 | Receiving means |
| 322 | Antenna |
| 324 | Antenna |

**Claims**

1. Radio frequency system (312) for optical heterodyning, the radio frequency system comprising:

- first receiving means (100) for receiving an analogue electrical intermediate frequency signal, the analogue electrical intermediate frequency signal carrying information
- second receiving means (112) for receiving an analogue electrical radio frequency signal with a radio frequency;
- an analogue-digital converter (102; 200) for converting the analogue electrical intermediate frequency signal into a digitized intermediate frequency signal,
- a light source (104) for emitting a first light beam,
- a first splitter (106) for splitting the first light beam into a second and a third light beam,
- the digitized intermediate frequency signal being adapted for modulating either the first light beam or the second light beam by a first modulator (108; 202) into a modulated first or second light beam,
- a second modulator (110) for modulating the third light beam by the analogue electrical radio frequency signal into a modulated third light beam, the second modulator comprising third receiving means for receiving the analogue electrical radio frequency signal,
- a first combiner (114) for combining the second and the modulated third light beam into a fourth light beam; and
- an optoelectronic device (116) for converting the fourth light beam into an electrical output signal, the electrical output signal comprising the information, wherein the electrical output signal has an electrical output signal frequency, the electrical output signal frequency being a combination of the intermediate frequency and the radio frequency.

2. Radio frequency system according to claim 1, wherein the second and the third modulator are phase modulators.

3. Radio frequency system according to claim 2, wherein the light source comprises fourth receiving means for receiving the digitized intermediate frequency signal, wherein the light source further comprises modulation means for modulating the first light beam by the digitized intermediate frequency signal.

**4.** Radio frequency system according to any one of the preceding claims, wherein the light source is a laser or a light emitting diode.

**5.** Radio frequency system according to any one of the preceding claims, wherein the optoelectronic device is a photodiode or a phototransistor.

**6.** A sender (302) comprising a radio frequency system according to any one of the preceding claims, wherein the sender further comprises

- receiving means (306) for receiving a baseband signal;
- modulation means (308) for modulating the baseband signal into an intermediate frequency signal; and
- sending means (310) for sending the intermediate frequency signal to the first receiving means of the radio frequency system.

**7.** A receiver (304) comprising a radio frequency system according to any one of the claims 1-5, wherein the receiver further comprises

- first receiving means (314) for receiving a high frequency signal containing the information;
- second receiving means (320) for receiving an analogue electrical radio frequency signal;
- sending means (316) for sending the high frequency signal to the first receiving means of the radio frequency system and for sending the analogue electrical radio frequency signal to the second receiving means of the radio frequency system.

**8.** Base station apparatus (300) comprising a receiver according to claim 7 and/or a sender according to claim 6.

**Amended claims in accordance with Rule 137(2) EPC.**

**1.** Radio frequency system (312) for optical heterodyning, the radio frequency system comprising:

- first receiving means (100) for receiving an analogue electrical intermediate frequency signal, the analogue electrical intermediate frequency signal carrying information
- second receiving means (112) for receiving an analogue electrical radio frequency signal with a radio frequency;
- an analogue-digital converter (102; 200) for converting the analogue electrical intermediate frequency signal into a digitized intermediate frequency signal,
- a light source (104) for emitting a first light beam,
- a first splitter (106) for splitting the first light beam into a second and a third light beam,
- the digitized intermediate frequency signal being adapted for modulating the first light beam by a first modulator (108; 202) into a modulated first light beam,
- a second modulator (110) for modulating the third light beam by the analogue electrical radio frequency signal into a modulated third light beam, the second modulator comprising third receiving means for receiving the analogue electrical radio frequency signal,
- a first combiner (114) for combining the second and the modulated third light beam into a fourth light beam; and
- an optoelectronic device (116) for converting the fourth light beam into an electrical output signal, the electrical output signal comprising the information, wherein the electrical output signal has an electrical output signal frequency, the electrical output signal frequency being a combination of the intermediate frequency and the radio frequency;
- wherein the light source comprises fourth receiving means for receiving the digitized intermediate frequency signal, wherein the light source further comprises modulation means for modulating the first light beam by the digitized intermediate frequency signal.

**2.** Radio frequency system according to claim 1, wherein the second and the third modulator are phase modulators.

**3.** Radio frequency system according to any one of the preceding claims, wherein the light source is a laser or a light emitting diode.

**4.** Radio frequency system according to any one of the preceding claims, wherein the optoelectronic device is a photodiode or a phototransistor.

**5.** A sender (302) comprising a radio frequency system according to any one of the preceding claims, wherein the sender further comprises

- receiving means (306) for receiving a baseband signal;
- modulation means (308) for modulating the baseband signal into an intermediate frequency signal; and
- sending means (310) for sending the intermediate frequency signal to the first receiving means of the radio frequency system.

**6.** A receiver (304) comprising a radio frequency system according to any one of the claims 1-4, wherein the receiver further comprises

- first receiving means (314) for receiving a high frequency signal containing the information;
- second receiving means (320) for receiving an analogue electrical radio frequency signal;
- sending means (316) for sending the high frequency signal to the first receiving means of the radio frequency system and for sending the analogue electrical radio frequency signal to the second receiving means of the radio frequency system.

**7.** Base station apparatus (300) comprising a receiver according to claim 6 and/or a sender according to claim 7.

Fig. 1

Fig. 2

# Fig. 3

Europäisches
Patentamt

European
Patent Office

Office européen
des brevets

## EUROPEAN SEARCH REPORT

Application Number

EP 10 29 0368

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/131662 A1 (STRUTZ SHANE J [US] ET AL) 19 September 2002 (2002-09-19) * abstract * * paragraphs [0023] - [0025] * * figure 4 * ----- | 1-8 | INV. H04B10/12 H04B1/26 |
| Y | WO 03/081811 A1 (UNIV YONSEI SEOUL [KR]; CHOI WOO-YOUNG [KR]; SEO YOUNG-KWANG [KR]; CHO) 2 October 2003 (2003-10-02) * page 5, line 20 - page 7, line 26 * * figure 5 * ----- | 1-8 | |
| A | US 2007/206957 A1 (SHOJI YOZO [JP] ET AL) 6 September 2007 (2007-09-06) * abstract * * paragraph [0037] - paragraph [0039] * * figure 1 * ----- | 1-8 | |

TECHNICAL FIELDS
SEARCHED      (IPC)

H04B

The present search report has been drawn up for all claims

| Place of search | Date of completion of the search | Examiner |
|---|---|---|
| Munich | 27 January 2011 | Ribbe, Åsa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                     EP 10 29 0368

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2011

| Patent document cited in search report | | Publication date | Patent family member(s) | | Publication date |
|---|---|---|---|---|---|
| US 2002131662 | A1 | 19-09-2002 | NONE | | |
| WO 03081811 | A1 | 02-10-2003 | AU | 2003215937 A1 | 08-10-2003 |
| | | | KR | 20030077089 A | 01-10-2003 |
| US 2007206957 | A1 | 06-09-2007 | CN | 1934806 A | 21-03-2007 |
| | | | JP | 3841793 B2 | 01-11-2006 |
| | | | JP | 2005244655 A | 08-09-2005 |
| | | | WO | 2005083915 A1 | 09-09-2005 |

For more details about this annex : see Official Journal of the European Patent Office, No. 12/82